# FASCICULE DE BREVET EUROPEEN

(11) **EP 0 963 302 B1**
(45) Date de publication et mention de la délivrance du brevet: **31.10.2001**
(21) Numéro de dépôt: 98913555.3
(22) Date de dépôt: 18.02.1998
(51) Int. Cl.: B60C 19/08, B60C 11/18

(54) **PNEUMATIQUE A PLUSIEURS MELANGES NON CONDUCTEURS**
REIFEN MIT MEHREREN NICHTLEITENDEN MISCHUNGEN
TYRE WITH SEVERAL NON-CONDUCTIVE MIXES

(30) Priorité: 24.02.1997 FR 9702276
(43) Date de publication de la demande: 15.12.1999
(73) Titulaire: Compagnie Générale des Etablissements MICHELIN-MICHELIN & CIE, 63040 Clermont-Ferrand Cedex 09 (FR)
(72) Inventeur: VERBRUGGHE, Didier, F-63970 Aydat (FR)
(74) Mandataire: Devaux, Edmond-Yves
(86) Numéro de dépôt international: EP9800909
(87) Numéro de publication internationale: WO9838050

(56) Documents cités:
- EP-A- 0 658 452
- EP-A- 0 681 931
- EP-A- 0 718 127
- EP-A- 0 747 243
- GB-A- 544 757
- US-A- 2 329 332

## Description

La présente invention a pour objet un pneumatique possédant plusieurs mélanges comprenant à titre de charge majoritaire de la silice, ou mélanges faiblement chargés en noir, un de ces mélanges étant la bande de roulement. Elle concerne plus particulièrement un pneumatique destiné à porter de lourdes charges, tel qu'un pneumatique pour véhicule "Poids-Lourds".

Les problèmes d'environnement étant de plus en plus cruciaux, les économies de carburant et la lutte contre les nuisances créées par les véhicules à moteur étant devenues une priorité, un des objectifs des manufacturiers de pneumatiques est de réaliser un pneumatique possédant à la fois une très faible résistance au roulement, une excellente adhérence tant sur sol sec que sur sol humide ou enneigé ou verglacé, une très bonne résistance à l'usure, et enfin un bruit de roulement réduit.

Pour atteindre cet objectif, il a été proposé dans la demande de brevet européen EP-A-501 227, un pneumatique possédant une bande de roulement comportant à titre de charge renforçante principale de la silice. Si cette solution permet d'obtenir le meilleur compromis entre l'ensemble des propriétés très contradictoires mentionnées ci-dessus, il s'est cependant avéré qu'en fonction des véhicules, les pneumatiques mettant en oeuvre une bande de roulement comportant à titre de charge renforçante principale de la silice présentent l'inconvénient d'accumuler à un degré plus ou moins important l'électricité statique qui se forme par friction du pneumatique sur la route lors du roulage du véhicule en raison de l'absence de conductivité électrique de la silice.

L'électricité statique ainsi accumulée dans un pneumatique est susceptible de provoquer, lorsque certaines conditions particulières sont réunies, un désagréable choc électrique à l'occupant d'un véhicule lorsqu'il est amené à toucher la carrosserie du véhicule. Elle est en outre susceptible de hâter le vieillissement du pneumatique en raison de l'ozone générée par la décharge électrique. Elle peut aussi être à l'origine, en fonction de la nature du sol et du véhicule, d'un mauvais fonctionnement de la radio embarquée dans le véhicule en raison des interférences qu'elle génère.

Ce problème d'accumulation d'électricité statique dans un pneumatique et de la plupart des inconvénients qui y sont liés est fort ancien et s'est déjà posé lorsque la charge renforçante utilisée était du noir de carbone. Ainsi dans le brevet US-A-2 329 332, il a été proposé de disposer à l'extérieur de la carcasse une nappe de mélange caoutchouteux à base de noir de carbone d'acétylène, ayant une grande conductivité électrique, s'étendant d'un bourrelet du pneumatique à l'autre et de disposer une étroite bande de ce même mélange circonférentiellement entre la carcasse et la bande de roulement. Le brevet GB-A-544 757 décrit un perfectionnement de la solution précédente, ce perfectionnement consistant à ménager une ou plusieurs fines incisions de largeur nulle à travers toute l'épaisseur de la bande roulement du pneumatique non vulcanisé et à y injecter du caoutchouc de conductivité électrique élevé pour relier la nappe conductrice s'étendant de bourrelet à bourrelet à la surface de la bande de roulement en contact avec le sol. Il a également été proposé dans le brevet US-A-2 339 546 d'établir une liaison entre le châssis du véhicule et la route au moyen d'une nappe de caoutchouc fortement conductrice, à base de noir de carbone d'acétylène, qui est en contact avec la jante de roue sur laquelle est monté le pneumatique et qui s'étend du bourrelet du pneumatique jusqu'à la surface de la bande de roulement, soit sur les bords de celle-ci, soit à l'intérieur de celle-ci.

La demande EP 0 658 452 A1 décrit l'adaptation des principes connus à un pneumatique dit moderne, adaptation qui permet de résoudre les principaux problèmes afférents aux solutions proposées dans les documents cités ci-dessus et en particulier les hétérogénéités néfastes introduites dans les architectures de pneumatique. La solution proposée consiste à insérer une bande de mélange caoutchouteux conducteur, s'étendant préférentiellement sur toute la circonférence du pneumatique et reliant la surface de la bande de roulement soit à l'une des nappes de sommet, soit à l'armature de carcasse, soit à tout autre partie du pneumatique suffisamment conductrice de l'électricité, la nécessaire conductivité électrique étant conférée par la présence d'un noir de carbone adapté.

La demande EP 0 747 243 A (correspondant au préambule de la revendication 1) décrit un pneumatique avec une bande de roulement formée d'un mélange caoutchouteux non ou peu conducteur, bande de roulement sous laquelle est disposée une couche de bonne conductivité électrique, caractérisé en ce qu'une couche conductrice est posée entre les deux faces de la bande de roulement appelées à être jointes, ladite couche réunissant la surface de bande de roulement à la couche de bonne conductivité.

Une telle solution n'est pas optimisée pour un pneumatique comportant plusiseurs couches de mélanges caoutchouteux au-dessus de l'armature de sommet et des couches de caoutchouc entre l'armature de sommet et l'armature de carcasse, comme tel est le cas de tout pneumatique susceptible de rouler avec une température de fonctionnement stabilisée élevée. Elle n'est pas optimisée ni dans sa réalisation industrielle, ni dans son architecture tant du point de vue coût que performances obtenues.

Si un des buts de l'invention est de dissiper dans un pneumatique, ayant plusieurs mélanges non conducteurs de l'électricité, les charges électrostatiques induites par le roulage du pneumatique, sans significativement affecter le niveau des propriétés du pneumatique, l'autre but est de pouvoir obtenir un pneumatique le plus simple possible et de moindre coût tant de point de vue coût matière que coût de fabrication.

Conformément à l'invention, ce but est atteint grâce aux caractéristiques définies dans la revendication 1.

La couche radialement supérieure de la bande de roulement du pneumatique est rendue conductrice de l'électricité grâce à la présence d'un insert caoutchouteux conducteur, reliant la surface de bande de roulement destinée à entrer en contact avec le sol à la face radialement intérieure de ladite couche, cet insert annulaire s'étendant sur toute la circonférence de la surface de bande de roulement, et étant perpendiculaire à l'armature de sommet quasi-cylindrique.

La composition caoutchouteuse constituant ledit insert et la connexion électrique entre deux couches conductrices peut être une composition à base d'un caoutchouc spécial conducteur du courant électrique. Cependant selon une variante préférentielle, la composition de caoutchouc constituant la connexion conductrice des charges électrostatiques est à base d'un caoutchouc naturel et/ou de caoutchoucs synthétiques habituellement utilisés dans la confection des pneumatiques et particulièrement des bandes de roulement ayant comme charge renforçante un noir de carbone conducteur de préférence usuellement utilisé dans la fabrication des pneumatiques.

La connexion électrique avec la jante de montage se fait préférentiellement par l'armature de carcasse qui vient s'enrouler autour des tringles, en étant en contact avec le mélange caoutchouteux recouvrant extérieurement les bourrelets du pneumatique.

Les caractéristiques et avantages de la présente invention seront mieux comprises à l'aide du dessin annexé à la description qui suit, dessin sur lequel,
- la figure 1 représente schématiquement, vu en coupe méridienne, un pneumatique de type "Poids-Lourds" conforme à l'invention,
- la figure 2 représente schématiquement et partiellement, vu en coupe dans un plan parallèle au plan équatorial, le même pneumatique,
- la figure 3 représente schématiquement une variante de disposition de la bande conductrice disposée à la soudure de la couche radialement inférieure de la bande de roulement.

Le pneumatique, de dimension 315/80.R.22.5, conçu pour avoir une basse résistance au roulement, comprend une armature de carcasse (1), composée d'une nappe métallique formée de câbles métalliques inextensibles enrobés dans un mélange de calandrage caoutchouteux, rendu conducteur des charges électrostatiques par l'intermédiaire d'un noir de carbone couramment utilisé comme charge renforçante dans les mélanges. Ladite armature de carcasse (1) est, comme connue, ancrée à au moins une tringle (2) dans chaque bourrelet pour former un retournement (10). Entre ledit retournement (10) et la nappe de carcasse (1) est disposé au moins un bourrage de renforcement (3). A l'intérieur de ladite armature de carcasse (1) se trouvent les couches usuelles de renfort, et les couches dites intérieures constituées de mélanges généralement imperméables aux gaz de gonflage connus. La(les) extrémité(s) de cette(ces) couche(s) intérieure(s) est(sont) généralement recouverte(s) par la partie axialement interne de la couche protectrice (4) du bourrelet, couche d'usure dont la partie axialement externe vient prendre appui sur la jante de montage, ladite couche étant généralement très chargée en noir de carbone, donc fortement conductrice.

L'armature de carcasse (1) est surmontée en son sommet d'une armature de sommet (9), composée, dans l'exemple décrit, de deux demi-nappes dites de triangulation formées de câbles métalliques inextensibles orientés par rapport à la direction circonférentielle d'un angle pouvant être compris entre 30° et 90° ; puis radialement au-dessus, de deux nappes dites de travail composées de câbles métalliques inextensibles croisés d'une nappe à la suivante en faisant avec la direction circonférentielle des angles pouvant être égaux ou inégaux et de valeur absolue comprise entre 10° et 30° ; puis généralement, en dernier lieu d'au moins une nappe dite de protection formée de câbles élastiques faisant avec la direction circonférentielle un angle égal en sens et valeur à l'angle de la nappe de travail radialement la plus à l'extérieur. Tous les câbles de cette armature de sommet (9) sont enrobés dans un ou plusieurs mélange(s) de calandrage caoutchouteux, conducteur(s) des charges électrostatiques grâce à un noir de carbone couramment utilisé comme charge renforçante dans les mélanges.

L'armature de sommet (9), ne possédant pas le même profil transversal que celui de l'armature de carcasse (1) sous-jacente, est séparée de ladite armature de carcasse (1) par un ensemble caoutchouteux (6) de faible épaisseur sur la partie axiale centrale (61), où les deux armatures sont sensiblement parallèles et, de part et d'autre de ladite partie axiale (61), d'épaisseur croissante en allant vers l'extérieur du pneumatique pour former des coins (62). Pour des raisons d'échauffement, ces coins (62) de caoutchouc et la couche de liaison (61) ne sont pas réalisés à partir de mélanges de caoutchouc conducteurs, car très peu chargés en noir de carbone. Radialement au-dessus de l'armature de sommet est disposés la bande de roulement composée de la couche radialement intérieure (7), dite sous-couche, formée de mélange chargé majoritairement par de la silice, sous-couche (7) elle-même surmontée radialement de la couche radialement supérieure (8), couche de roulement, très fortement chargée en silice. La bande de roulement (7,8) est reliée aux bourrelets par les mélanges de flancs (5), eux aussi très fortement chargés en silice.

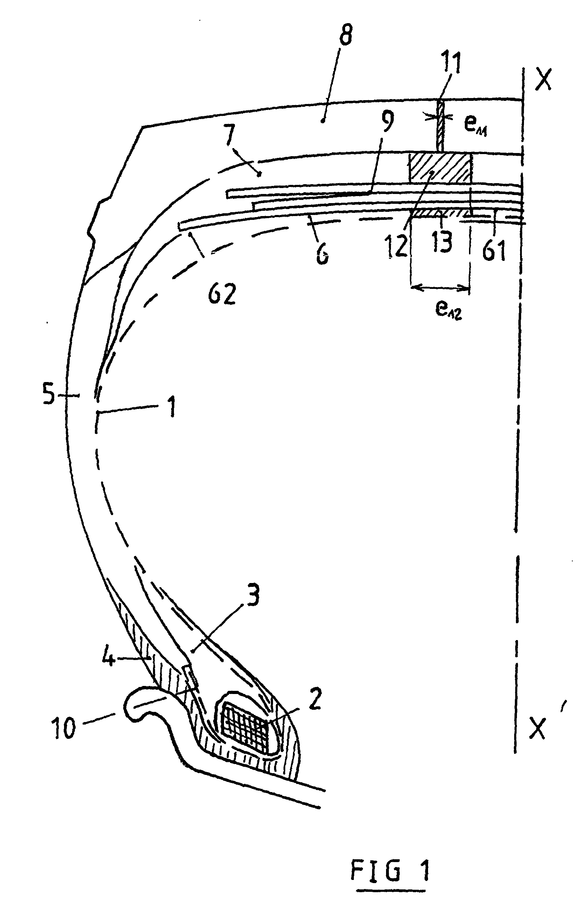

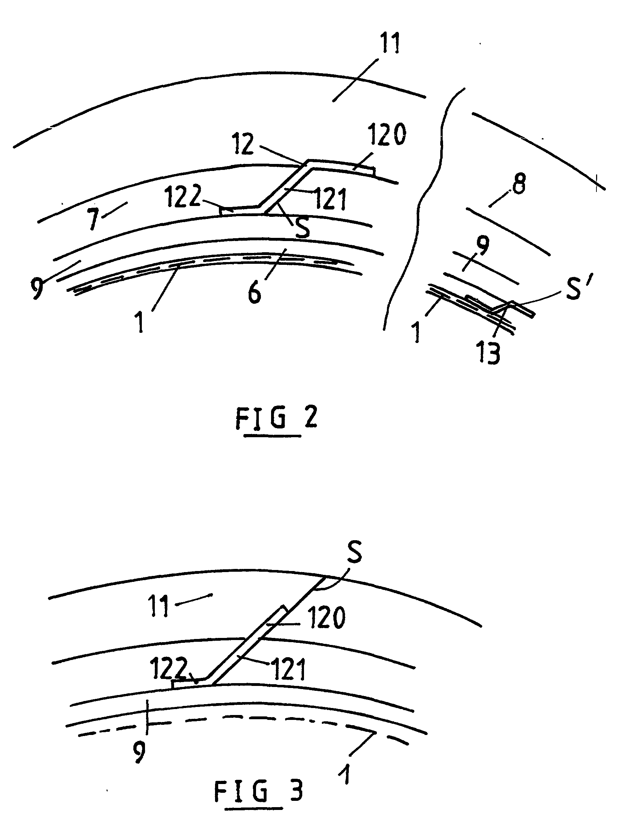

La couche de roulement (8) est rendue conductrice, comme connue en soi, au moyen de l'insert caoutchouteux (11), se présentant sous forme d'un anneau circulaire sur toute la hauteur de la couche de roulement (8) pour relier la surface de la bande de roulement venant en contact avec le sol avec la face radialement superieure de la sous couche (7). Cet insert (11) de très faible largeur axiale, est, dans le cas montré, unique et décentré par rapport an plan équatorial XX' du pneumatique. Il pourrait être centré, en particulier dans le cas de l'absence sur la bande de roulement d'une rainure centrale ; il pourrait y avoir deux inserts (11), placés par exemple symétriquement par rapport au plan équatorial, ou plus, mais de toute manière placés axialement de sorte que le contact avec le sol puisse être établi quelque soit le taux d'usure de la bande de roulement. Cet ou ces inserts (11) conducteurs de charges électrostatiques peuvent être réalisés par tous moyens appropriés et ce, tant au moment de la confection du pneumatique à l'état non vulcanisé qu'après vulcanisation. Le ou les inserts conducteurs (11) peuvent être réalisés durant la confection de la couche radialement supérieure (8) de la bande de roulement à l'état non vulcanisé par coextrusion, ou par injection, ou par coupure de la couche par tout moyen approprié et application de la composition de caoutchouc conductrice sous forme d'une dissolution de caoutchouc. Dans le cas décrit, le ou les inserts (11) sont réalisés sous forme d'anneau(x) par coextrusion durant la confection de la couche supérieure de la bande de roulement. La couche radialement intérieure (7) étant obtenue de manière séparée par extrusion, la connexion électrique entre la couche de roulement (8) et la nappe radialement extérieure de l'armature de sommet (9), formée de câbles métalliques enrobés dans un mélange de caoutchouc chargé avec un noir de carbone usuel et conducteur, est réalisée par la bande de caoutchouc (12), constituée avantageusement d'un élastomère identique à l'un de ceux mis en oeuvre dans la formulation d'une couche radialement extérieure (8) ou à l'un de ceux utilisé pour la formulation d'une couche radialement intérieure (7), que lesdites conches soient majoritairement chargées en silice ou qu'elles soient normalement chargées en noir de carbone. Comme montré sur la figure 1, ladite bande (12) a une largeur axiale e₁₂ préférentiellement plus grande que la largeur axiale très faible e₁₁ de l'insert (11), ce qui permet de grandes facilité et sûreté de fabrication. Dans le cas de la dimension décrite, les largeurs e₁₂ et e₁₁ sont respectivement de 20 et 0,4 mm. Quant l'épaisseur de ladite bande (12); elle est, comme montrée sur la figure 2, très faible et égale à quelques dixièmes de mm, par exemple 0,6 mm. La longueur de la bande peut être subdivisée en trois parties : une partie supérieure (120) disposée entre la couche supérieure (8) de bande de roulement au niveau axial de l'insert (11) et la couche inférieure (7) de ladite bande de roulement, une partie médiane (121) qui est insérée entre les deux faces de la soudure S de la couche (7), faces généralement inclinées par rapport à la direction radiale d'un angle voisin de 45°, et d'une partie inférieure (122) qui assure le contact avec le caoutchouc d'enrobage de la nappe radialement supérieure de l'armature de sommet (9) en étant posée sur ladite nappe. Les parties supérieure et inférieure sont de faibles longueurs, et dans le cas précis, de 10 mm, mais pouvant être comprises, selon les dimensions de pneumatiques traités, entre 5 mm et 25 mm.

La connexion électrique entre l'armature de sommet (9) et l'armature de carcasse (1) se réalise par le même système, c'est-à-dire par l'utilisation d'une bande (13), de même constitution et sensiblement de mêmes dimensions que la bande (12), la largeur axiale pouvant en effet être moindre que la largeur axiale de la bande (12), la concordance entre dispositions axiales des moyens conducteurs n'étant plus un problème. Ladite bande (13) est posée sur l'armature de carcasse (1), puis entre les deux faces de la soudure S' du profilé (6), puis sur la face radialement supérieure dudit profilé. La présence de deux bandes (13) peut s'avérer utile, particulièrement de deux bandes (13) disposées axialement au niveau des coins (62) et symétriquement par rapport au plan équatorial XX', comme montré en pointillé sur la figure 1. La soudure S' du profilé (6) n'étant généralement pas localisée circonférentiellement au même endroit que la soudure S, la position circonférentielle de la bande (13) est décalée par rapport à la position circonférentielle de la bande (12), comme montré sur la partie droite de la figure 2.

Dans certaines configurations de fabrication, les couches (7) et (8) sont coextrudées. II est alors guère possible d'insérer la partie supérieure (120) d'une bande (12) entre la couche supérieure et la couche inférieure. Il suffit pour assuré la connexion électrique de disposer, entre les deux faces de la soudure S, l'ensemble partie supérieure. - partie médiane de la bande (12) (figure 3), la partie supérieure (120) prenant contact avec l'insert (11) au niveau des faces de la soudure S commune aux deux couches de bande de roulement.

La connexion complète est alors assurée par le mélange d'enrobage, des câbles de l'armature de carcasse, qui, dans la région des bourrelets, est en contact avec la couche d'usure (4) entourant le bourrelet, cette connexion permettant en conséquence d'utiliser comme mélanges caoutchouteux constituant les flancs du pneumatique des mélanges aussi fortement ou complètement chargés en silice. L'emploi en combinaison de mélanges chargés à la silice pour la constitution des couches de bande de roulement, des flancs et des couches entre armature de sommet et armature de carcasse d'un pneumatique "Poids-Lourds" permet un gain considérable en résistance en roulement et par voie de conséquence en consommation de carburant.

## Revendications

1. Pneumatique comprenant une bande de roulement composée de deux couches radiales (7, 8) dont la charge renforçante est majoritairement de la silice, la couche radialement supérieure (8) étant rendue conductrice au moyen d'au moins un insert annulaire (11) perpendiculaire à la surface de ladite bande de roulement, une armature de sommet (9) et une armature de carcasse (1) rendues conductrices au moyen de mélange(s) d'enrobage des câbles qui sont conducteur(s), et une connexion conductrice de charges électriques reliant la surface de bande de roulement à la jante de montage, la connexion électrique entre la couche radialement supérieure (8) de bande de roulement rendue conductrice et l'armature de sommet (9) conductrice, se réalise par une première bande (12) de mélange caoutchouté, conducteur de faibles épaisseur, largeur et longueur, posée entre les deux faces de la soudure S de la couche radialement inférieure (7) de bande de roulement non conductrice au niveau axial de l'insert (11) de la couche radialement supérieure (8), **caractérisé en ce que** d'une part lesdites armatures (9 et 1) sont séparées l'une de l'autre par un profilé (6) constitué d'un mélauge caoutchouteux à base de silice, et d'autre part la connexion électrique entre l'armature de carcasse (1) et l'armature de sommet (9) conductrices se réalise par au moins une deuxième bande (13) sensiblement de même dimensions que la première bande (12), posée entre les deux faces de la soudure S' de la couche non conductrice (6), et en contact avec les moyens rendant conductrices lesdites armatures (1 et 9).

2. Pneumatique selon la revendication 1, **caractérisé en ce que** la ou les bandes (12, 13) ont des largeurs axiales e₁₂ comprises entre 0,4 et 20 mm et préférentiellement plus grandes que les largeurs axiales très faibles e₁₁ de ou des inserts (11) avec lesquels elles sont en contact.

3. Pneumatique selon l'une des revendications 1 ou 2, **caractérisé en ce que** la bande (12) comprend une partie centrale (121) posée entre les deux faces de la soudure (5) de la couche (7) de bande de roulement, une partie supérieure (120) posée entre la couche supérieure (8) et la couche (7), et une partie inférieure (122) assurant le contact avec le caoutchouc d'enrobage de l'armature de sommet (9) en étant posée sur ladite armature.

4. Pneumatique selon l'une des revendications 1 ou 2, **caractérisé en ce que** la bande (12) comprend une partie supérieure (120) et une partie centrale (121) posées entre les deux faces de la soudure S de la couche (7) et une partie inférieure (122) posée sur l'armature de sommet (9).

## Claims

1. A tyre comprising a tread composed of two radial layers (7, 8), the reinforcing filler of which is majoritarily silica, the radially upper layer (8) being made conductive by means of at least one annular insert (11) perpendicular to the surface of said tread, a crown reinforcement (9) and a carcass reinforcement (1) made conductive by means of a cable encasing mix or mixes which are conductive, and a connection conductive of electrical charges connecting the surface of the tread to the mounting rim, the electrical connection between the radially upper layer (8) of the tread, made conductive, and the conductive crown reinforcement (9) is realised by a first band (12) of rubberised mix, conductive and of low thickness, width and length, placed between the two faces of the splice S of the radially lower layer (7) of the tread, non conductive at the axial level of the insert (11) of the radially upper layer (8), **characterised in that** on one hand said reinforcements (9 and 1) are separated from each other by a profiled element (6) formed of a silica-based rubber mix, and on the other hand the electrical connection between the conductive carcass reinforcement (1) and crown reinforcement (9) is realised by means of at least one second band (13) substantially of the same dimensions as the first band (12), placed between the two faces of the splice S' of the non-conductive layer (6), and in contact with the means making said reinforcements (1 and 9) conductive.

2. A tyre according to Claim 1, **characterised in that** the band or bands (12, 13) have axial widths e₁₂ comprised between 0.4 and 20 mm and preferably greater than the very small axial widths e₁₁ of the insert or inserts (11) with which they are in contact.

3. A tyre according to one of Claims 1 or 2, **characterised in that** the band (12) comprises a central part (121) laid between the two faces of the splice (5) of the layer (7) of the tread, an upper part (120) laid between the upper layer (8) and the layer (7), and a lower part (122) ensuring contact with the encasing rubber of the crown reinforcement (9) by being laid on said reinforcement.

4. A tyre according to one of Claims 1 or 2, **characterised in that** the band (12) comprises an upper part (120) and a central part (121) laid between the two faces of the splice S of the layer (7) and a lower part (122) laid on the crown reinforcement (9).

## Patentansprüche

1. Reifen mit einer Lauffläche, die aus zwei radialen Schichten (7, 8) zusammengesetzt ist, deren verstärkender Zuschlag vorwiegend Silizium ist, wobei die radial obere Schicht (8) mittels mindestens einer ringförmigen Einlage (11) leitfähig gemacht ist, die sich senkrecht zur genannten Lauffläche erstreckt, einer Scheitelbewehrung (9) und einer Karkassenbewehrung (1), die mittels einer Mischung bzw. Mischungen zum Umhüllen von Seilen leitfähig gemacht sind, die Leiter sind, und einer Verbindung, die für elektrische Ladungen leitfähig ist und die Lauffläche mit der Montagefelge verbindet, wobei die elektrische Verbindung zwischen der radial oberen Schicht (8) der Lauffläche, die leitfähig gemacht wurde, und der leitfähigen Scheitelbewehrung (9) durch ein erstes Band (12) aus Gummimischung, das leitfähig ist und geringe Dicke, Breite und Länge aufweist, hergestellt wird, das zwischen die beiden Stirnflächen der Schweißstelle S der radial unteren, nichtleitenden Schicht (7) der Lauffläche auf Höhe der Einlage (11) der radial oberen Schicht (8) eingelegt ist, **dadurch gekennzeichnet, daß** einerseits die genannten Bewehrungen (9 und 1) voneinander durch ein Profil (6) getrennt sind, das aus einer Gummimischung auf Siliziumbasis gebildet ist, und andererseits die elektrische Verbindung zwischen der Karkassenbewehrung (1) und der Scheitelbewehrung (9), die leitend sind, durch mindestens ein zweites Band (13) erfolgt, das im wesentlichen dieselben Abmessungen wie das erste Band (12) aufweist, zwischen die beiden Stirnflächen der Schweißstelle S' der nichtleitenden Schicht (6) eingelegt ist und in Kontakt mit den Mitteln steht, die die genannten Bewehrungen (1 und 9) leitend machen.

2. Reifen nach Anspruch 1, **dadurch gekennzeichnet, daß** das Band oder die Bänder (12, 13) axiale Breiten e₁₂ aufweisen, die zwischen 0,4 und 20 mm liegen und bevorzugt größer sind als die sehr geringen, axialen Breiten e₁₁ der Einlage(n) (11), mit der bzw. denen sie in Kontakt stehen.

3. Reifen nach einem der Ansprüche 1 oder 2, **dadurch gekennzeichnet, daß** das Band (12) einen mittleren Teil (121) aufweist, der zwischen die beiden Stirnflächen der Schweißstelle (5) der Schicht (7) der Lauffläche eingelegt ist, einen oberen Teil (120), der zwischen die obere Schicht (8) und die Schicht (7) eingelegt ist, und einen unteren Teil (122), der den Kontakt mit dem Umhüllungsgummi der Scheitelbewehrung (9) sicherstellt und auf die genannte Bewehrung aufgelegt ist.

4. Reifen nach einem der Ansprüche 1 oder 2, **dadurch gekennzeichnet, daß** das Band (12) einen oberen Teil (120) und einen mittleren Teil (121) aufweist, die zwischen die beiden Stirnflächen der Schweißstelle S der Schicht (7) eingelegt sind, sowie einen unteren Teil (122), der auf die Scheitelbewehrung (9) aufgelegt ist.
